(19) Europäisches Patentamt

European Patent Office

Office européen des brevets

(11) **EP 2 012 046 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***F16H 3/093*** *(2006.01)*

(21) Anmeldenummer: **08008969.1**

(22) Anmeldetag: **15.05.2008**

(54) **Stufengetriebe mit parallelen Nebenwellen**

Stepped transmission with parallel auxiliary shafts

Boîte de vitesse à ondes secondaires parallèles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.07.2007 DE 102007031076**

(43) Veröffentlichungstag der Anmeldung:
**07.01.2009 Patentblatt 2009/02**

(73) Patentinhaber: **GM Global Technology Operations, Inc.**
**Detroit MI 48265-3 (US)**

(72) Erfinder: **Remmler, Mathias**
**67294 Mauchenheim (DE)**

(74) Vertreter: **Kraenzmer, Martin**
**Adam Opel AG**
**Gewerblicher Rechtschutz Patentrecht**
**IPC: A0-02**
**65423 Rüsselsheim (DE)**

(56) Entgegenhaltungen:
**WO-A-2006/056804 JP-A- 2005 163 927**

**Beschreibung**

Die vorliegende Erfindung betrifft ein Stufengetriebe mit einer Antriebswelle und zwei Nebenwellen, wie zum Beispiel aus EP 0 239 553 A1 oder EP 0 540 989 A1 bekannt.

Bei diesen bekannten Stufengetrieben trägt die Antriebswelle eine Mehrzahl von Antriebswellenrädern, deren jedes mit wenigstens einem von einer der Nebenwellen getragenen Nebenwellenrad kämmt, und eine Mehrzahl von Kupplungen ist vorgesehen, um einige dieser Räder wahlweise drehfest an die sie tragende Welle zu kuppeln oder eine ihre freie Drehung zuzulassen.

Das aus EP 0 239 553 A1 bekannte Getriebe hat fünf Antriebswellenräder, die mit jeweils einem Nebenwellenrad kämmen und fünf Vorwärtsgänge darzustellen gestatten. Ein Rückwärtsgang ist darstellbar mit Hilfe eines Paares von miteinander kämmenden Nebenwellenrädern, von denen eines von der ersten und das zweite von der zweiten Nebenwelle getragen ist. Da jeder Vorwärtsgang ein eigenes Antriebswellenrad beansprucht und die Nebenwellenräder, die den Rückwärtsgang darstellen, gegen die Antriebswellenräder axial versetzt sind, hat das Getriebe eine beträchtliche, zur Gesamtzahl von Vor- und Rückwärtsgängen proportionale axiale Ausdehnung.

Das aus EP 0 540 989 A1 bekannte Getriebe ist ein Sechsganggetriebe mit vier Antriebswellenrädern, von denen zwei jeweils mit Nebenwellenrädern auf beiden Nebenwellen kämmen. Indem von den zwei mit einem gleichen Antriebswellenrad kämmenden Nebenwellenrädern jeweils nur eines wahlweise an seine Nebenwelle angekuppelt ist, können mit Hilfe dieser Antriebswellenräder jeweils zwci Gänge dargestellt werden, so dass die vier Antriebswellenräder zum Darstellen von sechs Vorwärtsgängen genügen. Dennoch ist die axiale Ausdehnung auch dieses Getriebes beträchtlich, da an diversen Stellen der Antriebs- und Nebenwellen Kupplungen zwischen die Räder eingeschoben werden müssen.

Aus der gettungsgemäßen JP 2005 163927 A ist ein Stufengetriebe mit einer Antriebswelle und zwei Nebenwellen bekannt. Die Antriebswelle trägt dabei eine Mehrzahl von Antriebswellenrädern, welche teilweise untereinander drehfest verbunden sind und welche jeweils mit wenigstens einem von einer Nebenwelle getragenen Nebenwellenrad kämmen. Ferner weist das Stufengetriebe Kupplungen zum drehfesten Verbinden der Räder mit der sie tragenden Welle auf.

Aufgabe der vorliegenden Erfindung ist, ein Stufengetriebe mit einer Antriebswelle und zwei Nebenwellen anzugeben, das eine hohe Zahl von Gängen bei geringer axialer Ausdehnung darzustellen erlaubt.

Die Aufgabe wird gelöst, indem bei einem Stufengetriebe mit einer Antriebswelle und zwei Nebenwellen, wobei die Antriebswelle eine Mehrzahl von Antriebswellenrädern trägt, deren jedes mit wenigstens einem von einer der Nebenwellen getragenen Nebenwellenrad kämmt, und einer Mehrzahl von Kupplungen zum drehfesten Verbinden der Räder mit der sie tragenden Welle ein erstes und ein zweites der Antriebswellenräder untereinander drehfest verbunden sind, ein erstes und ein zweites der Nebenwellenräder untereinander drehfest verbunden sind, das erste Nebenwellenrad mit dem ersten Antriebswellenrad kämmt und das zweite Nebenwellenrad mit einem dritten der Antriebswellenräder kämmt. Dieser Aufbau ermöglicht die Darstellung jeweils eines Ganges durch jedes Paar von miteinander kämmenden Rädern der Antriebs- und Nebenwellen sowie

wenigstens eines zusätzlichen Ganges, bei dem Drehmoment von dem dritten Antriebswellenrad über das erste und zweite Nebenwellenrad auf das erste und zweite Antriebswellenrad übertragen wird, so dass letztere mit einer anderen Drehzahl rotieren können als die sie tragende Antriebswelle.

Ein auf diese Weise dargestellter zusätzlicher Gang ist vorzugsweise der erste Gang des Stufengetriebes, da bei diesem aus der hohen Zahl von beteiligten Rädern resultierende Reibungsverluste für den Gesamtwirkungsgrad des Getriebes wenig ins Gewicht fallen.

Um den zusätzlichen Gang darzustellen, kann das zweite Antriebswellenrad mit einem dritten Nebenwellenrad der ersten oder der zweiten Nebenwelle kämmen.

Wenn das zweite Antriebswellenrad mit einem dritten Nebenwellenrad der ersten Nebenwelle kämmt, kann noch ein zusätzlicher Gang mit Hilfe eines vierten Antriebswellenrades dargestellt werden, das mit einem vierten Nebenwellenrad der zweiten Nebenwelle kämmt.

Eine zum Ankuppeln des ersten und zweiten Nebenwellenrades an die erste Nebenwelle benötigte Kupplung kann dann Platz sparend mit dem vierten Antriebswellenrad axial überlappen.

Eine Muffe dieser ersten Kupplung ist vorzugsweise zwischen einer Stellung, in der sie das erste und das zweite Nebenwellenrad an die erste Nebenwelle kuppelt, einer Leerlaufstellung und einer Stellung verschiebbar, in der sie das dritte Nebenwellenrad an die erste Nebenwelle kuppelt. Diese Doppelnutzung der ersten Kupplung trägt ebenfalls zur Platzersparnis bei.

Indem das dritte Nebenwellenrad mit einem Rückwärtsrad der zweiten Nebenwelle kämmt und eine zweite Kupplung zum Kuppeln des Rückwärtsrades an die zweite Nebenwelle mit der ersten Kupplung axial überlappt, kann auch ein Rückwärtsgang dargestellt werden, ohne die axiale Baulänge des Getriebes zu vergrößern.

Die Antriebswelle trägt vorzugsweise eine Kupplung zum wahlweisen Ankuppeln entweder des ersten und zweiten Antriebswellenrades oder des dritten Antriebswellenrades an die Antriebswelle. Diese Kupplung kann mit der ersten Kupplung der ersten Nebenwelle baugleich sein.

Da das dritte Antriebswellenrad zusätzlich mit einem fünften Nebenwellenrad der zweiten Nebenwelle kämmt, kann es zur Darstellung von zwei verschiedenen Gängen benutzt werden, was ebenfalls zur Kompaktheit des Getriebes beiträgt. Somit kann eine Kupplung zum selektiven Ankuppeln des fünften oder des vierten Nebenwellenrades an die zweite Nebenwelle Platz sparend axial überlappend mit der Kupplung der Antriebswelle angeordnet sein.

Zur kompakten Bauform trägt ferner bei, wenn ein Schaft, der das vierte Nebenwellenrad mit einer Schaltverzahnung der Kupplung der zweiten Nebenwelle verbindet, mit dem ersten Antriebswellenrad axial überlappt.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1     eine schematische Darstellung eines erfindungsgemäßen Getriebes;
Fig. 2     bis
Fig. 9     jeweils Schaltkonfigurationen des Getriebes zur Darstellung verschiedener Vorwärtsgänge; und
Fig. 10    und
Fig. 11    Schaltkonfigurationen von zwei Rückwärtsgängen.

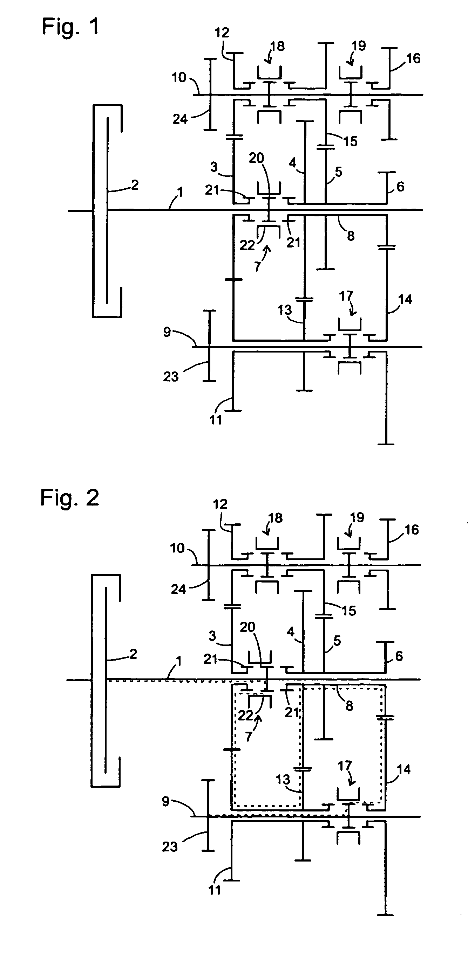

Eine Antriebswelle 1 des in Fig. 1 gezeigten Stufengetriebes ist über eine lastschaltbare Kupplung 2 an eine nicht dargestellte Brennkraftmaschine gekoppelt. Die Antriebswelle 1 trägt Gangräder, hier als Antriebswellenräder bezeichnet, 3 bis 6, wobei über eine Klauenkupplung 7 wahlweise das Antriebswellenrad 3 oder ein zur Antriebswelle 1 koaxialer, die Räder 4, 5, 6 tragender Schaft 8 an die Antriebswelle 1 ankuppelbar ist.

Parallel zur Antriebswelle 1 sind zwei Nebenwellen 9, 10 vorgesehen, wobei die Achsen der drei Wellen 1, 9, 10 so angeordnet sind, dass sie in einem (nicht dargestellten) Schnitt durch das Getriebe quer zu den Achsen 1, 9, 10 die Ecken eines Dreiecks bilden.

Das Antriebswellenrad 3 kämmt gleichzeitig mit zwei Nebenwellenrädern 11, 12, einem auf jeder Nebenwelle 9, 10. Die Antriebswellenräder 4, 6 kämmen mit Nebenwellenrädern 13 bzw. 14 der ersten Nebenwelle 9, das Antriebswellenrad 5 mit einem Nebenwellenrad 15 der zweiten Nebenwelle 10. Das Nebenwellenrad 14 kämmt außerdem mit einem Rückwärtsrad 16 auf der zweiten Nebenwelle 10. Räder 23, 24 der zwei Nebenwellen 9, 10 treiben eine gleiche, nicht dargestellte Abtriebswelle an.

Eine Klauenkupplung 17 kuppelt wahlweise die Nebenwellenräder 11, 13 oder das Nebenwellenrad 14 an die erste Nebenwelle 9. Eine Klauenkupplung 18 kuppelt wahlweise jeweils eines der Nebenwellenräder 12, 15 an die Nebenwelle 10, und eine Klauenkupplung 19 ist vorgesehen, um das Rückwärtsrad 16 an die Nebenwelle 10 zu kuppeln. Der Aufbau der Klauenkupplungen 7, 17 bis 19 ist von an sich bekannter Art, mit jeweils einem an der Welle 1, 9 oder 10 drehfesten Schaltmuffenträger 20, einer oder zwei benachbart zum Schaltmuffenträger 20 angeordneten und mit jeweils einem Rad drehfest verbundenen Schaltverzahnungen 21, einer Schaltmuffe 22, die aus einer Leerlaufstellung axial in ein oder zwei Schließstellungen verschiebbar ist, in der sie eine jeweils benachbarte Schaltverzahnung 21 drehfest mit dem Schaltmuffenträger 20 verbindet, und einer zwischen der Schaltmuffe 22 und jeder Schaltverzahnung 21 angeordneten Sperrsynchronisierung.

Fig. 2 zeigt die Konfiguration des Getriebes in einem ersten, kürzesten Gang. Die Schaltmuffe 22 der Klauenkupplung 7 ist zu dem Antriebswellenrad 3 hin verschoben, um dieses an die Antriebswelle 1 zu kuppeln. Dadurch sind die Nebenwellenräder 11, 13 der Nebenwelle 9 und über diese die Antriebswellenräder 4, 6 drehangetrieben. Das mit dem Antriebswellenrad 6 kämmende Nebenwellenrad 14 ist über die Klauenkupplung 17 an die Nebenwelle 9 gekuppelt und treibt diese an. Es ergibt sich ein Übersetzungsverhältnis $i_1 = (i_4 \times i_2)/i_7$, wobei $i_4$ das Verhältnis der Zähnezahlen der Räder 3 und 11, $i_2$ das Verhältnis der Zähnezahlen der Räder 6, 14 und $i_7$ das Verhältnis der Zähnezahlen der Räder 4 und 13 ist.

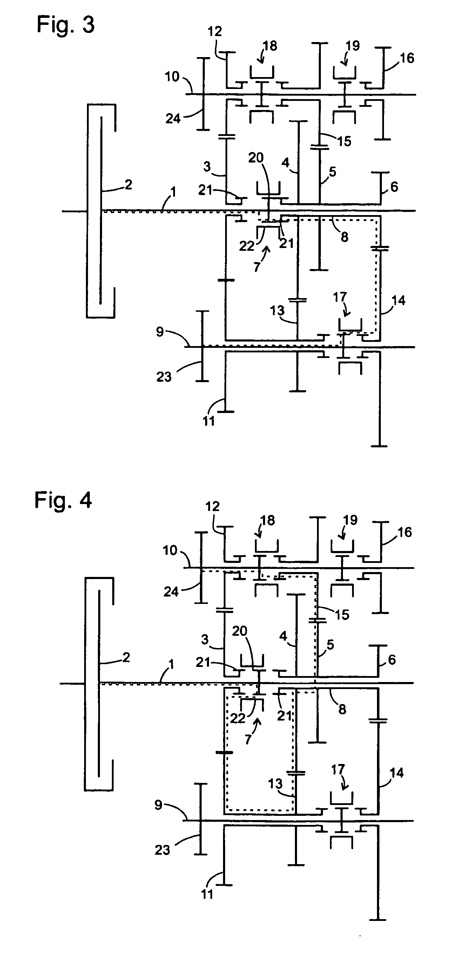

Im in Fig. 3 dargestellten zweiten Gang ist die Schaltmuffe 22 der Klauenkupplung 7 in Richtung der Antriebswellenräder 4, 5, 6 verschoben, so dass diese an die Antriebswelle 1 angekuppelt sind, und Drehmoment wird über die Räder 6, 14 und die in Richtung des Rades 14 verschobene Klauenkupplung 17 auf die erste Nebenwelle 9 übertragen. Das Übersetzungsverhältnis ist $i_2$.

Ein dritter Gang ist, wie in Fig. 4 gezeigt, darstellbar, indem wie beim ersten Gang Drehmoment von der Antriebswelle 1 über die Klauenkupplung 7 auf das Antriebswellenrad 3, über die Nebenwellenräder 11, 13 zum Antriebswellenrad 4 und von dort über das Antriebswellenrad 5, das Nebenwellenrad 15 und die Klauenkupplung 18 auf die zweite Nebenwelle 10 übertragen wird. Es ergibt sich ein Übersetzungsverhältnis $i_3 = (i_4 x i_5)/i_7$, wobei $i_4$ das Verhältnis der Zähnezahlen der Räder 3, 11 und $i_5$ dasjenige der Räder 5, 15 bezeichnet.

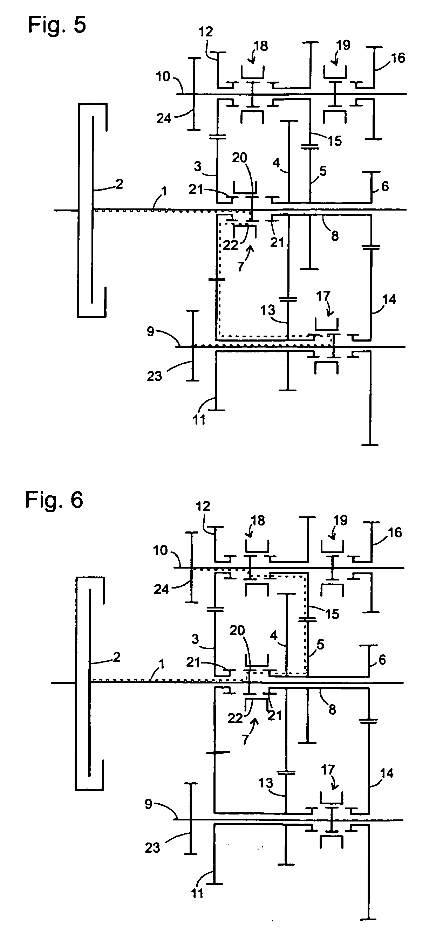

Im vierten Gang der Fig. 5 sind die Klauenkupplungen 7, 17 in Richtung der Räder 3 bzw. 11, 13 verschoben, und Drehmoment fließt zur Nebenwelle 9 über das Räderpaar mit dem oben definierten Übersetzungsverhältnis $i_4$.

Im fünften Gang (Fig. 6) fließt das Drehmoment über die Klauenkupplung 7, das Antriebswellenrad 5, das Nebenwellenrad 15 und die Klauenkupplung 18 zur zweiten Nebenwelle 10, und das Übersetzungsverhältnis ist $i_5$, wie oben definiert.

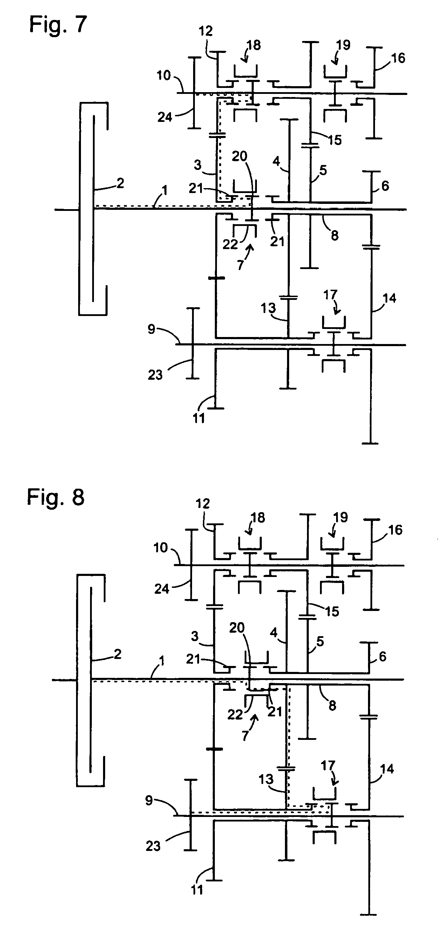

Ein sechster Gang ergibt sich, wie in Fig. 7 gezeigt, durch Drehmomentübertragung über die Klauenkupplung 7, das Antriebswellenrad 3, das Nebenwellenrad 12 und die Klauenkupplung 18 zur Nebenwelle 10 mit einem durch die Zähnezahlen der Räder 3, 12 festgelegten Übersetzungsverhältnis $i_6$.

In einem in Fig. 8 dargestellten siebten Gang läuft der Drehmomentfluss mit dem Übersetzungsverhältnis $i_7$ über die Klauenkupplung 7, das Antriebswellenrad 4, das Nebenwellenrad 13 und die Klauenkupplung 17 zur Nebenwelle 9.

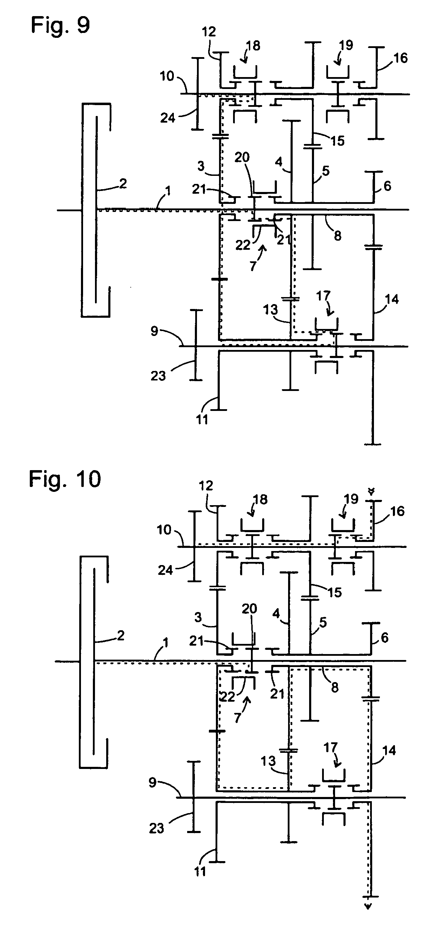

Der Aufbau des Getriebes erlaubt die Darstellung noch eines weiteren, achten Ganges unter Beteiligung von Nebenwellenrädern beider Nebenwellen 9, 10. In diesem Gang verläuft, wie in Fig. 9 gezeigt, der Drehmomentfluss von der Antriebswelle 1 über das erste Antriebswellenrad 4 und das Nebenwellenrad 13 zur ersten Nebenwelle 9 und von dort über die in einer gleichen Ebene liegenden Räder 11, 3, 12 zur zweiten Nebenwelle 10.

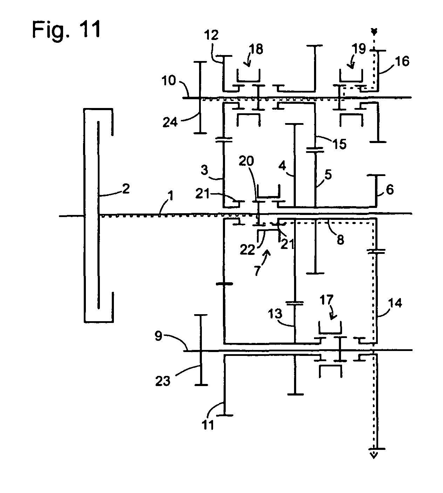

Mögliche Rückwärtsgänge sind in Fig. 10 und 11 gezeigt. Beim ersten Rückwärtsgang der Fig. 10 verläuft der Drehmomentfluss von der Antriebswelle 1 über das Antriebswellenrad 3 und das Nebenwellenrad 11 zur Nebenwelle 9, über die Räder 13, 4 zum Schaft 8 der Antriebswelle 1, über das Antriebswellenrad 6, das frei um die Nebenwelle 9 drehbare Nebenwellenrad 14, das mit ihm kämmende Rückwärtsrad 16 und die Kupplung 19 zur Nebenwelle 11. Das Übersetzungsverhältnis ist

$$i_{R1} = -i_2 * i_r / i_7,$$

wobei $i_R$ das Verhältnis der Zähnezahlen der Räder 16 und 6 ist. Um in diesem Gang denselben Betrag des Übersetzungsverhältnisses zu haben wie im ersten Vorwärts-Gang, muss $i_r \approx i_7$ sein, eine Anforderung, die mit den geometrischen Randbedingungen des Getriebes kompatibel und erfüllbar ist.

Ein anderer Rückwärtsgang, allerdings mit deutlich niedrigerem Übersetzungsverhältnis $i_{R2} = i_r$, ist wie in Fig. 11 gezeigt realisierbar.

Tabelle 1 zeigt ein erstes Beispiel für mit dem erfindungsgemäßen Getriebe realisierbare Übersetzungsverhältnisse $i_1$ bis $i_7$. Bei dieser Auslegung unterscheidet sich das Übersetzungsverhältnis des dritten Ganges wenig von dem des zweiten, so dass es in der Praxis nicht erforderlich ist, den dritten Gang schaltbar zu machen. Auch der achte Gang muss nicht unbedingt schaltbar sein, da er aufgrund der hohen Zahl der beteiligten Räder relativ hohe Reibungsverluste aufweist. Andererseits erhöht sich durch die Nutzung des achten Gangs die Spreizung des Getriebes beträchtlich. D.h., das Getriebe kann zweckmäßigerweise als ein 6-Gang- oder 7-Gang-Getriebe eingesetzt werden.

Tabelle 1

| Gang | Übersetzung i |
|------|---------------|
| 1 | $i_1 = i_4 * i_2 / i_7 = 3{,}75$ |
| 2 | $i_2 = 2{,}04$ |
| 3 | $i_3 = i_4 * i_5 / i_7 = 1{,}93$ |
| 4 | $i_4 = 1{,}36$ |
| 5 | $i_5 = 1{,}05$ |
| 6 | $i_6 = 0{,}85$ |
| 7 | $i_7 = 0{,}74$ |
| 8 | $i_8 = i_7 * i_6 / i_5 = 0{,}46$ |
| Spreizung | 5,06 ohne achter Gang<br>8,15 mit achtem Gang |

Entsprechendes gilt für das Ausführungsbeispiel der Tabelle 2.

Tabelle 2

| Gang | Übersetzung i |
|------|---------------|
| 1 | $i_1 = i_4 * i_2 / i_7 = 4{,}02$ |
| 2 | $i_2 = 2{,}04$ |

(fortgesetzt)

| Gang | Übersetzung i |
|------|---------------|
| 3 | $i_3=i_4{}^*i_5/i_7=1{,}88$ |
| 4 | $i_4=1{,}32$ |
| 5 | $i_5=0{,}954$ |
| 6 | $i_6=0{,}755$ |
| 7 | $i_7=0{,}67$ |
| 8 | $i_8=i_7{}^*i_6/i_5=0{,}53$ |
| Spreizung | 6,00 ohne achter Gang<br>7,58 mit achtem Gang |

Beim Ausführungsbeispiel der Tabelle 3 unterscheiden sich die Übersetzungsverhältnisse des zweiten und des vierten Ganges stark, und durch das Einschieben des dritten Ganges wird eine harmonische Staffelung der Übersetzungsverhältnisse erhalten. In dem Getriebe nach diesem Ausführungsbeispiel wird man also zweckmäßigerweise den dritten Gang tatsächlich nutzen, d.h. man wird das Getriebe als ein 7-Gang- oder 8-Gang-Getriebe einsetzen.

Tabelle 3

| Gang | Übersetzung i | $i_n/i_{n-1}$ |
|------|---------------|---------------|
| 1 | $i_1=i_4{}^*i_2/i_7=3{,}67$ | |
| 2 | $i_2=2{,}2$ | 0,6 |
| 3 | $i_3=i_4{}^*i_5/i_7=1{,}42$ | 0, 645 |
| 4 | $i_4=1$ | 0,7 |
| 5 | $i_5=0{,}85$ | 0,85 |
| 6 | $i_6=0{,}7$ | 0,82 |
| 7 | $i_7=0{,}6$ | 0,86 |
| 8 | $i_8=i_7{}^*i_6/i_5=0{,}49$ | |
| Spreizung | 6,12 ohne achter Gang<br>7,43 mit achtem Gang | |

**Bezugszeichenliste**

| | |
|---|---|
| Antriebswelle | 1 |
| lastschaltbare Kupplung | 2 |
| Antriebswellenrad | 3, 4, 5, 6 |
| Klauenkupplung | 7 |
| Schaft | 8 |
| Nebenwelle | 9, 10 |
| Nebenwellenrad | 11, 12, 13, 14, 15 |
| Rückwärtsrad | 16 |
| Klauenkupplung | 17, 18, 19 |
| Schaltmuffenträger | 20 |
| Schaltverzahnung | 21 |
| Schaltmuffe | 22 |
| Rad | 23, 24 |

**Patentansprüche**

1. Stufengetriebe mit einer Antriebswelle (1) und zwei Nebenwellen (9, 10), wobei die Antriebswelle (1) eine Mehrzahl von Antriebswellenrädern (3, 4, 5, 6) trägt, deren jedes mit wenigstens einem von einer der Nebenwellen (9, 10) getragenen Nebenwellenrad (11, 12, 13, 14, 15) kämmt, und einer Mehrzahl von Kupplungen (7, 17, 18, 19) zum drehfesten Verbinden der Räder (3-6, 11-15) mit der sie tragenden Welle (1, 9, 10), wobei ein erstes (4) und ein zweites (5, 6) der Antriebswellenräder (3-6) untereinander drehfest verbunden sind, ein erstes (13) und ein zweites (11) der Nebenwellenräder untereinander drehfest verbunden sind, das erste Nebenwellenrad (13) mit dem ersten Antriebswellenrad (4) kämmt und das zweite Nebenwellenrad (11) mit einem dritten (3) der Antriebswellenräder kämmt, **dadurch gekennzeichnet, dass** das dritte Antriebswellenrad (3) mit einem fünften Nebenwellenrad (12) der zweiten Nebenwelle (10) kämmt.

2. Stufengetriebe nach Anspruch 1, **dadurch gekennzeichnet, dass** ein erster Gang des Stufengetriebes über die ersten und zweiten Antriebs- und Nebenwellenräder (4, 5,6; 13, 11) übertragen wird.

3. Stufengetriebe nach Anspruch 1 oder 2, **dadurch gekennzeichnet, dass** das zweite Antriebswellenrad (6) mit einem dritten Nebenwellenrad (14) der ersten Nebenwelle (9) kämmt.

4. Stufengetriebe nach Anspruch 1 oder 2, **dadurch gekennzeichnet, dass** das zweite Antriebswellenrad (5) mit einem dritten Nebenwellenrad (15) der zweiten Nebenwelle (10) kämmt.

5. Stufengetriebe nach Anspruch 3, **dadurch gekennzeichnet, dass** ein mit dem ersten und zweiten Antriebswellenrad (4, 6) drehfest verbundenes viertes Antriebswellenrad (5) mit einem vierten Nebenwellenrad (15) der zweiten Nebenwelle (10) kämmt.

6. Stufengetriebe nach Anspruch 5, **dadurch gekennzeichnet, dass** eine erste Kupplung (17) zum Ankuppeln des ersten und zweiten Nebenwellenrades (13, 11) an die erste Nebenwelle (9) mit dem vierten Antriebswellenrad (5) axial überlappt.

7. Stufengetriebe nach Anspruch 6, **dadurch gekennzeichnet, dass** eine Schaltmuffe (22) der ersten Kupplung (17) zwischen einer Stellung, in der sie das erste und das zweite Nebenwellenrad (13, 11) an die erste Nebenwelle (9) kuppelt, einer Leerlaufstellung und einer Stellung verschiebbar ist, in der sie das dritte Nebenwellenrad (14) an die erste Nebenwelle (9) kuppelt.

8. Stufengetriebe nach Anspruch 7, **dadurch gekennzeichnet, dass** das dritte Nebenwellenrad (14) mit einem Rückwärtsrad (16) der zweiten Nebenwelle (10) kämmt und dass eine zweite Kupplung (19) zum Kuppeln des Rückwärtsrades (16) an die zweite Nebenwelle (10) mit der ersten Kupplung (17) axial überlappt.

9. Stufengetriebe nach einem der vorhergehenden Ansprüche, **dadurch gekennzeichnet, dass** die Antriebswelle (1) eine Kupplung (7) zum wahlweisen Ankuppeln entweder des ersten und zweiten Antriebswellenrades (4, 5, 6) oder des dritten Antriebswellenrades (3) an die Antriebswelle (1) trägt.

10. Stufengetriebe nach Anspruch 1, **dadurch gekennzeichnet, dass** die Antriebswelle (1) eine Kupplung (7) zum wahlweisen Ankuppeln entweder des ersten und zweiten Antriebswellenrades (4, 5, 6) oder des dritten Antriebswellenrades (3) an die Antriebswelle (1) trägt, und dass mit dieser Kupplung (7) eine Kupplung (18) zum selektiven Ankuppeln des fünften oder des vierten Nebenwellenrades (12, 15) an die zweite Nebenwelle (10) axial überlappt.

11. Stufengetriebe nach Anspruch 10, **dadurch gekennzeichnet, dass** ein Schaft, der das vierte Nebenwellenrad (15) mit einer Schaltverzahnung (21) der Kupplung (18) der zweiten Nebenwelle (10) verbindet, mit dem ersten Antriebswellenrad (4) axial überlappt.

**Claims**

1. A stepped transmission, comprising a drive shaft (1) and two auxiliary shafts (9, 10), with the drive shaft (1) carrying a plurality of drive shaft wheels (3, 4, 5, 6), each of which meshes with at least one auxiliary shaft wheel (11, 12, 13, 14, 15) which is carried by one of the auxiliary shafts (9, 10), and a plurality of clutches (7, 17, 18, 19) for connecting the wheels (3 to 6, 11 to 15) in a torsion-proof manner with the shaft (1, 9, 10) carrying the same, with a first (4) and a second (5, 6) of the drive shaft wheels (3 to 6) being connected among one another in a torsion-proof manner, and a first (13) and a second (11) of the auxiliary shaft wheels being connected among one another in a torsion-proof manner, the first auxiliary shaft wheel (13) meshing with the first drive shaft wheel (4) and the second auxiliary shaft wheel (11) meshing with a third one (3) of the drive shaft wheels, **characterized in that** the third drive shaft wheel (3) meshes with a fifth auxiliary shaft wheel (12) of the second auxiliary shaft (10).

2. A stepped transmission according to claim 1, **characterized in that** a first gear of the stepped transmission is transferred via the first and second drive shaft wheels and auxiliary shaft wheels (4, 5, 6; 13, 11).

3. A stepped transmission according to claim 1 or 2, **characterized in that** the second drive shaft wheel (6) meshes with a third auxiliary shaft wheel (14) of the first auxiliary shaft (9).

4. A stepped transmission according to claim 1 or 2, **characterized in that** the second drive shaft wheel (5) meshes with a third auxiliary shaft wheel (15) of the second auxiliary shaft (10).

5. A stepped transmission according to claim 3, **characterized in that** a fourth drive shaft wheel (5) which is connected with the first and second drive shaft wheel (4, 6) in a torsion-proof manner meshes with a fourth auxiliary shaft wheel (15) of the second auxiliary shaft (10).

6. A stepped transmission according to claim 5, **characterized in that** the first clutch (17) overlaps axially with the fourth drive shaft wheel (5) for coupling the first and second auxiliary shaft wheel (13, 11) with the first auxiliary shaft (9).

7. A stepped transmission according to claim 6, **characterized in that** a gearshift sleeve (22) of the first clutch (17) can be shifted between a position in which it couples the first and second auxiliary shaft wheel (13, 11) with the first auxiliary shaft (9), an idle position and a position in which it couples the third auxiliary shaft wheel (14) with the first auxiliary shaft (9).

8. A stepped transmission according to claim 7, **characterized in that** the third auxiliary shaft wheel (14) meshes with a return wheel (16) of the second auxiliary shaft (10), and a second clutch (19) overlaps axially with the first clutch (17) for coupling the return wheel (16) with the second auxiliary shaft (10).

9. A stepped transmission according to one of the preceding claims, **characterized in that** the drive shaft (1) carries a clutch (7) for optionally coupling either the first and second drive shaft wheel (4, 5, 6) or the third drive shaft wheel (3) with the drive shaft (1).

10. A stepped transmission according to claim 1, **characterized in that** the drive shaft (1) carries a clutch (7) for optionally coupling either the first and second drive shaft wheel (4, 5, 6) or the third drive shaft wheel (3) with the drive shaft (1), and a clutch (18) overlaps axially with said clutch (7) for the selective coupling of the fifth and fourth auxiliary shaft wheel (12, 15) with the second auxiliary shaft (10).

11. A stepped transmission according to claim 10, **characterized in that** a shaft which connects the fourth auxiliary shaft wheel (15) with a gearshift toothing (21) of the clutch (18) of the second auxiliary shaft (10) overlaps axially with the first drive shaft wheel (4).

**Revendications**

1. Engrenage réducteur avec un arbre d'entraînement (1) et deux arbres secondaires (9, 10), dans lequel l'arbre d'entraînement (1) porte une pluralité de roues d'arbre d'entraînement (3, 4, 5, 6) dont chacune engrène avec au moins une roue d'arbre secondaire (11, 12, 13, 14, 15) portée par l'un des arbres secondaires (9, 10), et une pluralité d'accouplements (7, 17, 18, 19) pour la liaison solidaire en rotation des roues (3-6, 11-15) avec l'arbre qui les porte (1, 9, 10), une première (4) et une deuxième (5, 6) parmi les roues d'arbre d'entraînement (3-6) étant reliées entre elles de manière solidaire en rotation, une première (13) et une deuxième (11) parmi les roues d'arbre secondaire étant reliées entre elles de manière solidaire en rotation, la première roue d'arbre secondaire (13) engrenant avec la première roue d'arbre d'entraînement (4) et la deuxième roue d'arbre secondaire (11) avec une troisième (3) roue d'arbre d'entraînement, **caractérisé en ce que** la troisième roue d'arbre d'entraînement (3) engrène avec une cinquième roue d'arbre secondaire (12) du deuxième arbre secondaire (10).

**2.** Engrenage réducteur selon la revendication 1, **caractérisé en ce qu'**un premier rapport de l'engrenage réducteur est transmis par les première et deuxièmes roues de l'arbre d'entraînement et de l'arbre secondaire (4, 5, 6 ; 13, 11).

**3.** Engrenage réducteur selon la revendication 1 ou 2, **caractérisé en ce que** la deuxième roue d'arbre d'entraînement (6) engrène avec une troisième roue d'arbre secondaire (14) du premier arbre secondaire (9).

**4.** Engrenage réducteur selon la revendication 1 ou 2, **caractérisé en ce que** la deuxième roue d'arbre d'entraînement (5) engrène avec une troisième roue d'arbre secondaire (15) du deuxième arbre secondaire (10).

**5.** Engrenage réducteur selon la revendication 3, **caractérisé en ce qu'**une quatrième roue d'arbre d'entraînement (5) reliée de manière solidaire en rotation aux première et deuxième roues d'arbre d'entraînement (4, 6) engrène avec une quatrième roue d'arbre secondaire (15) du deuxième arbre secondaire (10).

**6.** Engrenage réducteur selon la revendication 5, **caractérisé en ce qu'**un premier accouplement (17) pour l'accouplement des première et deuxième roues d'arbre secondaire (13, 11) sur le premier arbre secondaire (9) se superpose dans le sens axial à la quatrième roue d'arbre d'entraînement (5).

**7.** Engrenage réducteur selon la revendication 6, **caractérisé en ce qu'**un manchon d'embrayage (22) du premier accouplement (17) peut être déplacé entre une position dans laquelle il couple la première roue d'arbre secondaire et la deuxième (13, 11) avec le premier arbre secondaire (9), une position de point mort et une position dans laquelle il couple la troisième roue d'arbre secondaire (14) avec le premier arbre secondaire (9).

**8.** Engrenage réducteur selon la revendication 7, **caractérisé en ce que** la troisième roue d'arbre secondaire (14) engrène avec une roue rétrograde (16) du deuxième arbre secondaire (10) et **en ce qu'**un deuxième accouplement (19) pour l'accouplement de la roue rétrograde (16) sur le deuxième arbre secondaire (10) se superpose au premier accouplement (17) dans le sens axial.

**9.** Engrenage réducteur selon l'une des revendications précédentes, **caractérisé en ce que** l'arbre d'entraînement (1) porte un accouplement (7) pour l'accouplement sélectif des première et deuxième roues d'arbre d'entraînement (4, 5, 6) ou de la troisième roue d'arbre d'entraînement (3) sur l'arbre d'entraînement (1).

**10.** Engrenage réducteur selon la revendication 1, **caractérisé en ce que** l'arbre d'entraînement (1) porte un accouplement (7) pour l'accouplement sélectif des première et deuxième roue d'arbre d'entraînement (4, 5, 6) ou de la troisième roue d'arbre d'entraînement (3) sur l'arbre d'entraînement (1) et
**en ce qu'**un accouplement (18) pour l'accouplement sélectif de la cinquième ou quatrième roue d'arbre secondaire (12, 15) sur le deuxième arbre secondaire (10) se superpose à cet accouplement (7) dans le sens axial.

**11.** Engrenage réducteur selon la revendication 10, **caractérisé en ce qu'**une tige reliant la quatrième roue d'arbre secondaire (15) à une denture d'embrayage (21) de l'accouplement (18) du deuxième arbre secondaire (10) se superpose à la première roue d'arbre d'entraînement (4) dans le sens axial.

Fig. 1

Fig. 2

**Fig. 3**

**Fig. 4**

**Fig. 5**

**Fig. 6**

Fig. 7

Fig. 8

Fig. 9

Fig. 10

## Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0239553 A1
- EP 0540989 A1
- JP 2005163927 A